**Europäisches Patentamt**

**European Patent Office**

**Office européen des brevets**

(19)

(11) Numéro de publication: **0 042 313**
**A1**

(12)

# DEMANDE DE BREVET EUROPEEN

(21) Numéro de dépôt: **81400688.8**

(22) Date de dépôt: **30.04.81**

(51) Int. Cl.³: **G 01 B 17/00,** G 06 F 3/02, G 01 D 5/48

(30) Priorité: **23.05.80 FR 8011551**

(71) Demandeur: **THOMSON-CSF, 173, Boulevard Haussmann, F-75360 Paris Cedex 08 (FR)**

(72) Inventeur: **Dieulesaint, Eugène, THOMSON-CSF 173, bld. Haussmann, F-75360 Paris Cedex 08 (FR)**
Inventeur: **Guedj, Richard, THOMSON-CSF SCPI 173, bld Haussmann, F-75360 Paris Cedex 08 (FR)**
Inventeur: **Royer, Daniel, THOMSON-CSF SCPI 173, bld Haussmann, F-75360 Paris Cedex 08 (FR)**

(43) Date de publication de la demande: **23.12.81**
**Bulletin 81/51**

(74) Mandataire: **Wang, Pierre et al, "THOMSON-CSF" - SCPI 173, bld. Haussmann, F-75360 Paris Cedex 08 (FR)**

(84) Etats contractants désignés: **DE GB NL**

(54) **Système de repérage à ondes élastiques de surface.**

(57) L'invention se rapporte aux dispositifs de saisie de données permettant, par la mise en œuvre d'ondes élastiques de surface, de relever les coordonnées d'un stylet (7) exécutant un tracé sur la surface (2) d'une plaquette piézo-électrique (1).

L'invention a pour objet un dispositif dans lequel la surface de mesure (2) est munie d'aspérités de dimensions négligeables par rapport à la longueur d'onde des ondes de surface. Le stylet (7) comportant un élément adducteur (8) d'une matière de marquage (10).

L'invention s'applique notamment à la transmission à distance de signes graphiques et à l'exploitation informatique des données numériques représentatives de tels signes.

ACTORUM AG

SYSTEME DE REPERAGE A ONDES ELASTIQUES DE SURFACE.

L'invention se rapporte aux systèmes de saisie de données permettant de transcrire un tracé effectué par un stylet sur une surface, en signaux électriques qui constituent un relèvement point par point de ce tracé. Elle concerne notamment les systèmes qui mettent en oeuvre des ondes élastiques de surface se propageant à la surface d'une plaquette piézoélectrique. L'extrémité du stylet inscripteur capte le champ électrique créé par les ondes élastiques au voisinage immédiat de la surface de la plaquette piézoélectrique. Le temps mis par les ondes élastiques de surface pour atteindre le stylet inscripteur est mesuré dans deux directions de propagation. Cette mesure chronométrique permet d'évaluer les distances qui séparent la pointe du stylet de deux transducteurs électromécaniques émettant en alternance des impulsions dont les fronts d'ondes balayent toute l'étendue de la plaquette. Les données saisies se présentent sous la forme d'une succession de couples de valeurs numériques précises dont l'ensemble constitue un relèvement point par point du mouvement imprimé au stylet. L'exploitation informatique de ces valeurs numériques permet de caractériser l'écriture et le dessin à des fins d'identification, mais un système de transmission numérique peut être mis en oeuvre pour reproduire à distance un graphisme quelconque. Un tel système a fait l'objet de la demande de brevet N° 76.20 765, déposée le 7 Juillet 1976 au nom de THOMSON-CSF avec pour intitulé "Système de repérage à ondes élastiques de surface".

En liaison avec une console de visualisation, l'opérateur chargé d'exécuter un tracé sur la tablette piézoélectrique peut vérifier ce qu'il écrit avec le stylet, mais ce moyen de contrôle de l'inscription est incommode puisque la trace observée ne résulte pas directement de l'action du stylet sur la plaquette. Les moyens électroniques employés pour visualiser correctement les mouvements de l'écriture sont suffisamment complexes pour limiter le développement des systèmes de saisie de données à ondes élastiques de surface. Le contrôle de l'exécution d'un tracé à même la surface sur laquelle on déplace un stylet est la chose la plus simple et la plus naturelle qui soit si la pointe du stylet laisse une trace matérielle visible aisément effaçable.

Les supports d'écriture connus se prêtent bien à ce contrôle, car ils présentent une texture permettant l'accrochage d'une encre ou d'une matière solide friable. Cependant, on ne peut pas envisager de recouvrir un support propageant des ondes élastiques de surface d'une feuille de papier, car une telle juxtaposition aurait pour effet de perturber les modes de propagation et de détection électrique ponctuelle de ces ondes.

La présente invention a pour objet un système de repérage à ondes élastiques de surface comprenant un substrat destiné à propager lesdites ondes, des moyens électriques d'excitation par impulsion reliés à des moyens transducteurs électromécaniques couplés audit substrat, une sonde munie d'une pointe exploratrice et des moyens chronométriques reliés auxdits moyens électriques d'excitation et à ladite sonde, ledit substrat étant constitué par un plateau comportant au moins une lamelle ; lesdites ondes de surface ayant des fronts d'onde rectilignes et se propageant à la surface de ladite lamelle selon deux direction distinctes telles que l'énergie vibratoire se propage perpendiculairement auxdits fronts d'onde rectilignes, caractérisé en ce que la surface libre de la lamelle comporte une aire formée de rugosités de profondeur sensiblement inférieure à la longueur d'onde des ondes élastiques, qui assurent l'accrochage d'une substance de marquage extraite de la pointe de la sonde ; cette pointe comportant un élement adducteur de cette substance capable de transmettre une impulsion induite lorsqu'il touche la surface libre au point de passage des impulsions vibratoires provenant des moyens transducteurs électro-mécaniques.

3

L'invention sera mieux comprise au moyen de la description ci-après et des figures annexées parmi lesquelles :

- la figure 1 est une vue isométrique d'un dispositif de relèvement des coordonnées d'un tracé selon l'addition ;

- la figure 2 est une vue en coupe partielle du dispositif de la figure 1 ;

- la figure 3 est le schéma électrique détaillé du dispositif de la figure 1 ;

- la figure 4 est un diagramme explicatif ;

- la figure 5 est une coupe représentative d'une première variante de réalisation du dispositif de la figure 1 ;

- la figure 6 est une vue en coupe de l'extrémité d'un stylet à bille ;

- la figure 7 est un schéma explicatif ;

- la figure 8 illustre un dispositif de relèvement de coordonnées à détection mécanique ;

- la figure 9 donne le détail d'un stylet inscripteur à détection mécanique.

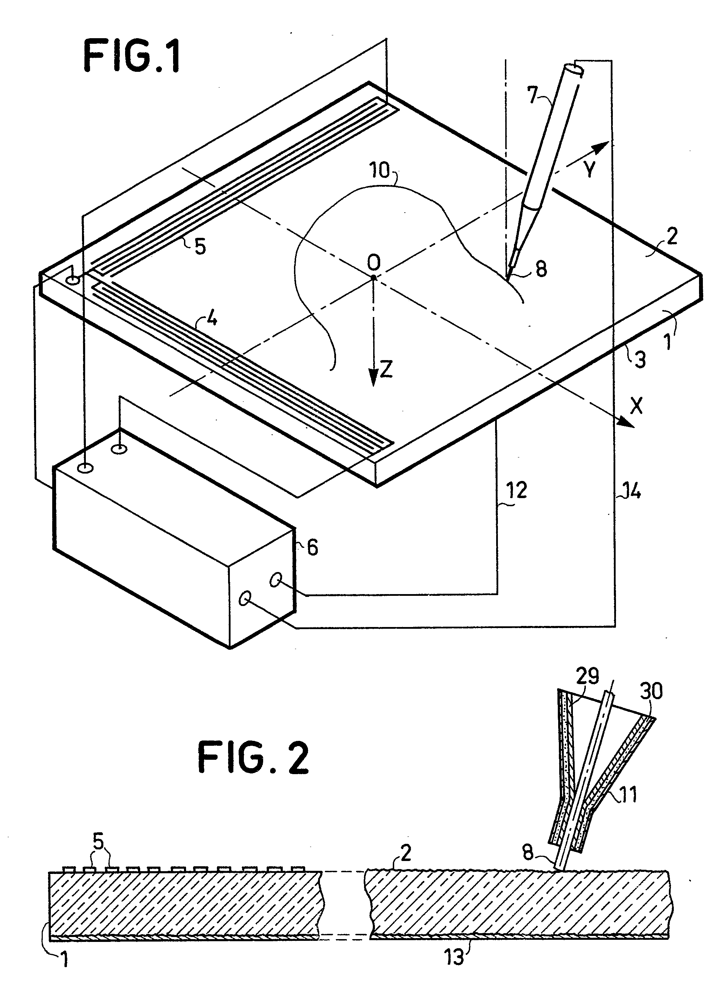

Le dispositif de la figure 1 comporte essentiellement une plaquette de matériau piézoélectrique 1 dont la face libre 2 porte suivant deux bords parallèles aux axes X et Y des réseaux d'électrodes 4 et 5 en forme de peignes interdigités. Ces peignes coopèrent avec le matériau piézoélectrique de la plaquette 1 de façon à former des transducteurs électromécaniques 4 et 5 qui émettent des ondes élastiques de surface. Les ondes émises par le transducteur 4 ont des fronts d'onde rectilignes parallèles à l'axe X et se propagent suivant la direction de l'axe Y.

4

Les transducteurs 4 et 5 sont commandés électriquement par des impulsions alternatives produites en alternance par un circuit de commande 6. La cadence des impulsions d'excitation est choisie de façon qu'un front d'onde émis par le transducteur 4 balaye toute l'étendue de la surface libre 2 avant que le front d'onde émis par le transducteur 5 ne balaye à son tour cette étendue. La détection du passage des fronts d'ondes se fait ponctuellement par un stylet 7 sensible au champ électrique créé à la surface 2 par les ondes élastiques de surface. La pointe 8 du stylet 7 laisse une trace visible 10 de sa trajectoire dans la surface libre 2. A cet effet, la zone de la surface 2, non recouverte par les peignes transducteurs 4 et 5 a été dépolie de manière à permettre l'accrochage d'une substance de marquage extraite de la pointe 8. A titre d'exemple non limitatif, la pointe 8 du stylet peut être constituée par une mine graphitée électriquement conductrice. Cette pointe 8 recueille une tension électrique lorsqu'elle touche la surface 2 en un point de passage des ondes élastiques de surface. Cette tension électrique est transmise par une liaison souple 14 à une borne d'entrée du circuit 6. La face inférieure 3 de la plaquette 1 peut être dépolie pour diffuser les ondes élastiques de volume qui se propagent dans l'épaisseur et qui peuvent sans celà créer des signaux parasites ; cette face peut être métallisée pour former une contre-électrode reliée au circuit 6 par la liaison de masse 12.

L'axe OZ forme avec l'axe X et l'axe Y un trièdre qui peut être trirectangle lorsque la propagation des ondes élastiques est isotrope dans la surface 2 ou lorsqu'elle se fait selon des directions priviligiées (plaquette cristalline).

5

La plaquette 1 peut avantageusement être taillée dans une lamelle mince de niobate de lithium. Les peignes transducteurs peuvent être constitués par des dépôts d'aluminium dont les dents sont espacées d'une demilongueur d'onde, c'est-à-dire $\lambda/2$. Pour des ondes de Rayleigh d'une fréquence de l'ordre de 25 MHz, la longueur d'onde atteint $\lambda = 160$ $\mu$m. L'épaisseur de la plaquette 1 peut être réduite jusqu'à $2 \lambda$ et la profondeur des aspérités de la surface 2 peut être de quelques microns. Un diamètre de mine de 0,3 mm assure une résolution convenable pour la pointe 8. Le dépôt graphité et le caractère dépoli de la surface 2 n'entravent pas la propagation des ondes élastiques de surface. Le dépolissage obtenu à l'aide d'un abrasif fin donne à la surface 2 un aspect légèrement diffusant, mais qui laisse subsister sa transparence.

Sur la figure 2, on a représenté en coupe partielle le stylet 7 et la plaquette d'écriture 1. La face libre 2 est formée d'aspérités microscopiques capables de provoquer l'effritement de la mine 8 du stylet inscripteur 7. La mine 8 est contenue dans un manchon métallique 29 qui empêche qu'elle ne casse sous l'effet de la poussée exercée sur le stylet. Le manchon métallique sert à transmettre la tension induite par le champ électrique qui se développe en surface lors du passage des ondes élastiques de surface. Un revêtement métallique 13 peut servir de contre-électrode mise à la masse. Pour éviter de capter des signaux parasites, le manchon 29 peut être entouré d'un revêtement métallique 11 mis à la masse. Ce revêtement 11 est isolé du manchon 29 par une gaine diélectrique 30. Le revêtement métallique 11 peut servir de contre-électrode lorsque le revêtement 13 est absent.

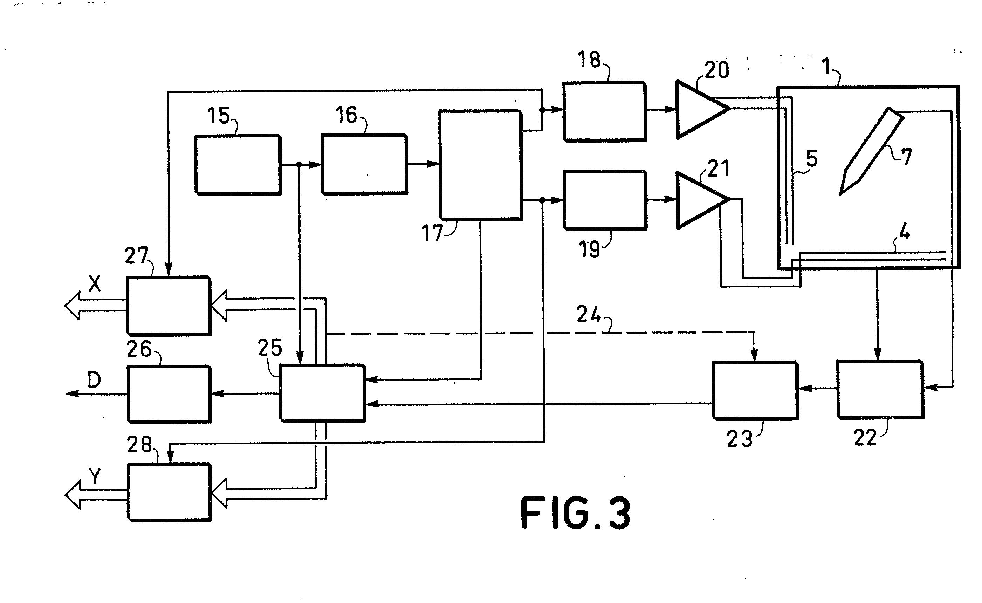

Sur la figure 3, on peut voir un schéma électrique illustratif des principaux éléments à mettre en oeuvre dans l'ensemble d'excitation et de mesure 6. L'élément principal est un compteur 25 qui reçoit sur l'une de ses entrées un train d'impulsions isochrones délivré par un générateur 15. Une unité de commande constituée par un générateur d'impulsions 16 fixe le déroulement des mesures répétitives effectuées alternativement dans les directions X et Y. Le générateur 16 est synchronisé par le générateur 15 et fournit alternativement deux groupes d'impulsions de commande qui sont séparées par le circuit séparateur 17. Les impulsions de commande destinées à déclencher la mesure selon X sont appliquées à un circuit de mise en forme 18 ; elles sont également appliquées à un registre mémoire 27 qui reçoit les données numériques relatives à la coordonnée X. Les impulsions de commande destinées à déclencher la mesure selon Y sont appliquées à un circuit de mise en forme 19 et simultanément à l'entrée d'un second registre mémoire 28 où sont stockées temporairement les données numériques relatives à la coordonnée Y. Le démarrage du compteur 25 est commandé par le circuit séparateur 17 à raison d'une impulsion de commande pour chaque impulsion transmise aux circuits 18 et 19. Les signaux d'excitation délivrés alternativement par les circuits 18 et 19 sont amplifiés par les amplificateurs 20 et 21. Ceux-ci alimentent respectivement les peignes transducteurs 5 et 4. L'arrêt du compteur 25 est provoqué par la détection ponctuelle des ondes élastiques de surface lorsqu'elles atteignent la pointe 8 de la sonde 7. A cet effet, le signal détecté issu de la sonde 7 est appliqué par l'intermédiaire d'un amplificateur 22 à un circuit 23 à seuil de déclenchement. Le circuit 23 commande l'arrêt du compteur 25. Le compteur 25 comporte également des bornes de sortie délivrant les données numériques sous la forme de mots de N bits. Ces données sont transmises aux registres 27 et 28 pour stockage temporaire, ce transfert se faisant par lignes omnibus. Le compteur 25 peut être muni d'une sortie supplémentaire reliée à un dispositif 26 indicateur de dépassement de capacité. Le signal de dépassement D indique à l'utilisateur que la mine 8 n'est pas posée sur la lamelle 1. Une liaison facultative 24 peut être établie entre la ligne omnibus et le circuit de détection 23, afin d'empêcher qu'il ne commande l'arrêt du compteur 25 très peu de temps après sa mise en marche. Cette inhibition prend en compte les éléments binaires de faible poids qui apparaissent en cours de comptage dans la ligne omnibus. Elle sert à éviter qu'un couplage capacitif entre les peignes 4 et 5 et la pointe de la sonde 7 puisse arrêter intempestivement le compteur 25.

Afin de mieux préciser le mode de fonctionnement, voici les données relatives à une réalisation typique La lamelle 1 étant taillée dans un cristal de Niobate de Lithium, on a formé à sa surface deux transducteurs interdigités comportant seize doigts rectilignes de largeur voisine de 30 microns. L'écartement uniforme des doigts est tel que la fréquence centrale d'émission se situe dans une plage allant de 25 à 30 MHz. Les directions de propagation non sensibles à l'effet de biréfringence acoustique correspondent à des vitesses de phase respectivement égales à 4000 et 3700 mètres par seconde. La fréquence de répétition des impulsions fournies par le générateur 15 est de 40 MHz et celle des impulsions de commande du démarrage du compteur 25 est de l'ordre de 2000 Hz, mais peut être portée aisément à 5000 Hz ou plus. Le signal électrique excitation délivré par les amplificateurs 20 et 21 est un échelon de tension d'une amplitude de 20 volts. Le seuil de déclenchement de circuit 23 est fixé à 0,5 volt et peut déterminer le déclenchement soit sur la première alternance du signal détecté par la sonde, soit sur l'enveloppe du signal détecté après redressement.

Dès qu'une impulsion de commande est émise par le circuit 16, le circuit séparateur 17 commande le démarrage du compteur 25 et la mise en condition d'attente de données du registre mémoire 27 ou 28. Simultanément, une impulsion vibratoire d'ondes élastiques de surface est émise par le peigne 5 ou 4. Après un intervalle de temps proportionnel à la distance franchie par l'impulsion vibratoire, la sonde 7 délivre un signal actionnant le circuit à seuil 23 et ce dernier commande l'arrêt du compteur 25. Si la sonde 7 est trop près du peigne émetteur ou si elle n'est pas posée sur la lamelle 1, le compteur n'est pas arrêté et une indication de dépassement D est fournie.

Dans l'exemple qui vient d'être considéré, on a utilisé un signal d'excitation en échelon et des peignes dont la structure est régulière et présente un écartement uniforme. Une première variante de réalisation consiste à exciter les peignes au moyen d'une impulsion de Dirac. Cependant, on peut améliorer le fonctionnement en mettant en oeuvre les techniques de corrélation ou de compression d'impulsion.

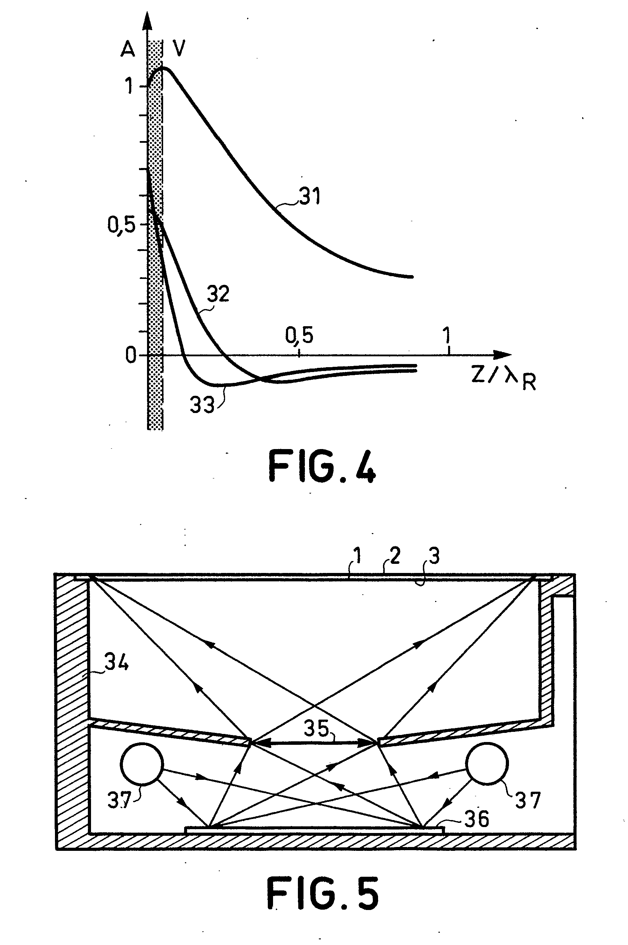

A titre d'exemple non limitatif, on a représenté sur la figure 4 en fonction de la profondeur Z exprimée en longueurs d'ondes $\lambda_R$ et mesurée depuis la surface 2, les amplitudes A des composantes longitudinale et transversale de la vibration elliptique qui caractérise la propagation d'ondes élastiques de surface. La courbe 33 montre comment varie le déplacement orienté selon la direction de propagation (composante longitudinale) et la courbe 31 montre la décroissance que subit le déplacement orienté perpendiculairement à la surface de la plaquette 1 (composante transversale). La courbe 32 représente la variation du potentiel électrique lorsqu'on s'enfonce sous la surface propageant les ondes élastiques de surface.

Ces courbes montrent qu'un microrelief n'excédant pas 1/20ème de longueur d'onde n'a pas d'action sensible sur la propagation des ondes élastiques de surface. Un dépolissage léger conduisant à des aspérités de quelques microns est amplement suffisant pour rendre inscriptible la surface initialement lisse de la plaquette piézoélectrique. Ce dépolissage peut être obtenu par tout moyen par exemple par abrasion avec un tampon de verre au moyen d'une poudre abrasive dont les grains ont une dimension moyenne de quelques microns.

Le caractère diffusant de la surface dépolie peut être mis à profit pour rendre visible une image réelle projetée sur cette surface.

La figure 5 est une vue en coupe d'un dispositif de relèvement des coordonnées d'un tracé qui peut être copié sur la surface libre 2 de la plaquette 1 au moyen d'un stylet inscripteur en suivant des contours projetés optiquement. Le support 34 de la plaquette 1 comporte deux chambres superposées séparées par une paroi portant un objectif de projection 35. Le fond horizontal du support 34 est éclairé par des sources lumineuses 37. Un document 36 peut être posé face à l'objectif 35 sur le fond du boîtier 34 afin d'en projeter l'image sur la surface 2. Cette image peut servir de guide pour le tracé effectué avec le stylet sur la surface 2. Le fait que le stylet laisse une trace de son passage permet d'éviter toute omission de trait lors de la copie de l'image.

L'effacement des traits laissés sur la surface dépolie 2 se fait aussi facilement que s'il s'agissait d'une vulgaire feuille de papier. La matière abandonnée par le stylet n'entrave pas la propagation des ondes élastiques de surface, car ce dépôt est extrêmement léger et sa résistance électrique n'entraîne aucun effet de court-circuit susceptible de gêner la captation ponctuelle de la tension induite par le champ électrique qui accompagne l'onde propagée.

Sans s'écarter du domaine de l'invention on peut adopter d'autres formes pour la réalisation du stylet. Au lieu de mettre en oeuvre une matière de marquage solide, on peut utiliser une encre qui se dépose sur la surface dépolie 2 au moyen d'une bille métallique.

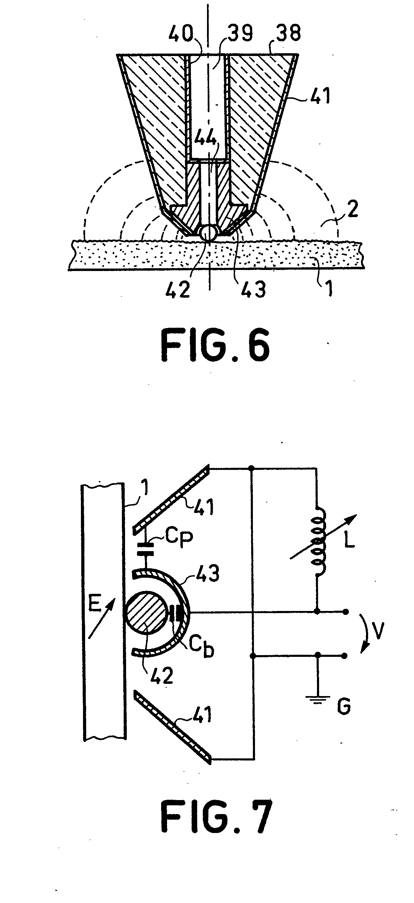

La figure 6 est une vue en coupe d'une pointe à bille permettant de recueillir ponctuellement la tension induite au passage des ondes élastiques de surface. La pointe comporte un nez tronconique 38 en matériau diélectrique. Un canal d'arrivée d'encre 39 est en communication avec un palier métallique 43 muni d'un logement sphérique qui retient une bille métallique 42. Le canal 39 communique avec la bille 42 par un capillaire 44. Une métallisation 40 de la paroi latérale du canal 39 relie électriquement le palier métallique 43 au câble 14 de la figure 1. L'encre pénètre jusqu'à la bille 42 et forme à sa surface un film encreur qui se renouvelle par roulement sur la surface 2. Une métallisation externe 41 du nez tronconique 38 est mise à la masse, afin de jouer le rôle de contre-électrode. L'encre peut être électriquement isolante car la tension alternative induite peut franchir la capacité $C_b$ existant entre la bille 42 et le palier porteur 43.

La figure 7 montre le schéma électrique équivalent de la pointe de la figure 6. Le champ électrique E produit par la plaquette diélectrique 1 donne naissance à une tension électrique induite V qui se transmet via la capacité $C_b$. La capacité parasite $C_p$ existant entre la contre-électrode 41 et le support de bille 43 peut réduire la valeur de la tension V. Une inductance L permet de neutraliser cette capacité parasite $C_p$ à la fré-

quence de fonctionnement . Comme le montre la figure 6, la contre-électrode 41 est couplée électrostatiquement à la surface de la plaquette 1 et comme elle est mise à la masse G, elle fait office de blindage.

On peut utiliser comme pointe de stylet inscripteur une pièce conique poreuse où une encre fluide rendue électriquement conductrice pénètre par capillarité. Cette pièce conique peut être faite de fibres de nylon réunies par un liant. On peut prévoir suivant l'axe de cette pointe conique un fil métallique qui joue le rôle de sonde de potentiel. Dans ce cas, il n'est pas nécessaire que l'encre soit électriquement conductrice.

Les dispositifs décrits jusqu'ici utilisent une plaquette piézoélectrique dont on détecte le champ électrique induit par le passage des ondes élastiques de surface.

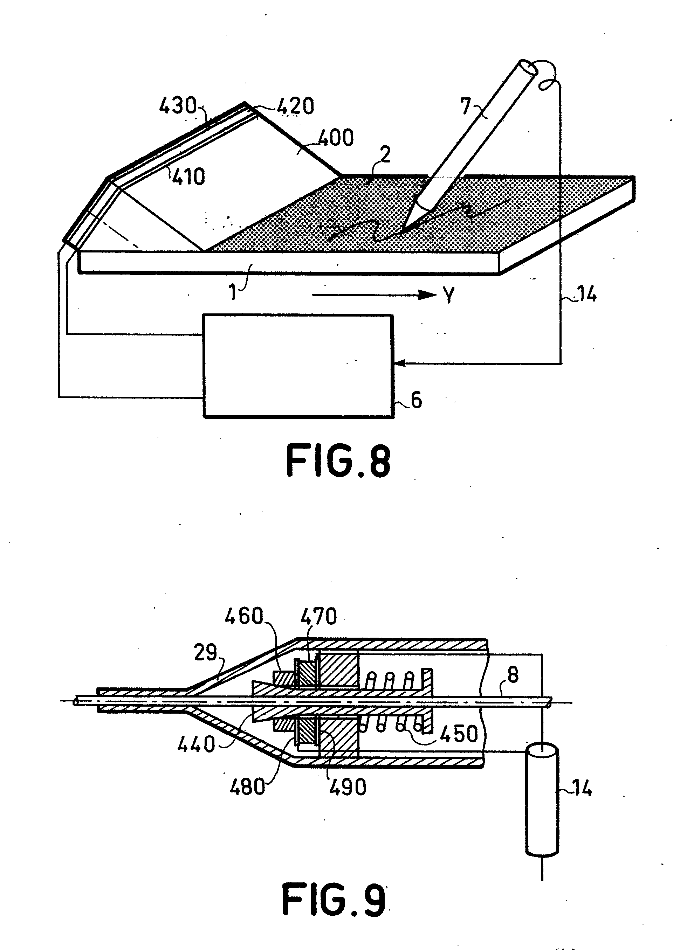

L'invention s'applique également lorsque l'on utilise une plaquette en matériau non-piézoélectrique. Sur la figure 8, on peut voir une plaquette 1 en silice à la surface 2 de laquelle des ondes élastiques sont rayonnées par un dispositif transducteur comprenant un transducteur électromécanique 410, 420, 430 associé à un prisme de couplage 400. Le transducteur électromécanique comporte une lamelle de matériau piézoélectrique 420 placée entre deux électrodes 410 et 430. La taille de la lamelle 420 ou la polarisation ont été choisies de façon à rayonner des ondes élastiques de volume dans le prisme de couplage. L'angle d'incidence dès ondes de volume est choisi de telle façon que la vitesse de phase des fronts d'ondes qui excitent la surface 2 corresponde à la vitesse de phase des ondes élastiques de surface. Le coupleur 400 joue donc le rôle de convertisseur de mode puisqu'il permet un transfert d'énergie entre des ondes de volume longitudinales ou transversales et des ondes élastiques de surface. Les autres références désignent les mêmes éléments que sur la figure 1, à ceci près que le stylet marqueur 7 est destiné à détecter directement le passage des ondes élastiques de surface. La détection mécanique du passage des ondes élastiques de surface est réalisée en munissant le stylet d'un transducteur électromécanique comme illustré sur la figure 9. L'extrémité du corps du stylet inscripteur comporte une pince élastique 440 dont le serrage dans le support 460 est obtenue au moyen d'un ressort de rappel 450. La mine 8 est fermement pincée par la pince 440 de sorte que les vibrations captées par sa pointe sont transmises au transducteur piézoélectrique 470, 480, 490. Le transducteur comporte une bague de matériau piézoélectrique 470 munie d'électrodes 480 et 490 sur ses deux faces annulaires. Le support 460 repose sur la face 480 et le transducteur est fixé au corps 29 du stylet inscripteur. Les vibrations détectées lorsque la mine 8 est en contact avec la surface 2 sont appliquées au transducteur piézoélectrique contenu dans le stylet 7 qui les convertit en tension électrique disponible aux bornes de la ligne coaxiale 14. On peut réaliser un stylet à bille muni d'un transducteur électromécanique en adoptant une configuration très proche de celle de la figure 9. Dans ce cas, c'est le support de bille qui est mécaniquement relié au transducteur électromécanique.

13

REVENDICATIONS

1. Système de repérage à ondes élastiques de surface comprenant un substrat destiné à propager lesdites ondes, des moyens électriques d'excitation par impulsion reliés à des moyens transducteurs électromécaniques couplés audit substrat, une sonde munie d'une pointe exploratrice et des moyens chronométriques reliés auxdits moyens électriques d'excitation et à ladite sonde, ledit substrat étant constitué par un plateau comportant au moins une lamelle ; lesdites ondes de surface ayant des fronts d'onde rectilignes et se propageant à la surface de ladite lamelle selon deux directions distinctes telles que l'énergie vibratoire se propage perpendiculairement auxdits fronts d'onde rectilignes, caractérisé en ce que la surface libre (2) de la lamelle (1) comporte une aire formée de rugosités de profondeur sensiblement inférieure à la longueur d'onde des ondes élastiques, qui assurent l'accrochage d'une substance de marquage (10) extraite de la pointe (8) de la sonde ; cette pointe (8) comportant un élément adducteur de cette substance capable de transmettre une impulsion induite lorsqu'il touche la surface libre (2) au point de passage des impulsions vibratoires provenant des moyens transducteurs électromécaniques.

2. Système selon la revendication 1, caractérisé en ce que la lamelle est réalisée en matériau piézoélectrique ; l'impulsion induite étant produite par détection du champ électrique produit à proximité de cette surface libre.

3. Système selon la revendication 1, caractérisé en ce que les moyens transducteurs électromécaniques comprennent un transducteur (410, 420, 430) séparé de la lamelle ; la sonde étant munie d'un transducteur électromécanique (470, 480, 490) recueillant les vibrations transmises par la pointe (8).

4. Système selon l'une quelconque des revendications 1 à 3, caractérisé en ce que l'aire de la surface libre (2) est une aire dépolie.

5. Système selon l'une quelconque des revendications 1 à 4, caractérisé en ce qu'il comprend des moyens optiques de projection (35, 37) permettant de projeter sur cette aire l'image d'un tracé porté par un support (36).

6. Système selon l'une quelconque des revendications 1 à 5, caractérisé en ce que la substance de marquage (10) est initialement solide et électriquement conductrice ; l'élément adducteur étant constitué par une mine (8) débouchant à l'extrémité d'un embout (29) de guidage.

7. Système selon la revendication 6, caractérisé en ce que l'embout (29) est blindé par une cage conductrice (11) faisant office de contre-électrode pour la captation de l'impulsion induite par le passage de l'onde élastique de surface.

8. Système selon l'une quelconque des revendications 1 à 6, caractérisé en ce que la substance de marquage (10) est une encre ; l'élément adducteur étant constitué par une bille métallique (42) prisonnière d'un palier sphérique métallique (43) formant la pointe (8) du stylet (7).

9. Système selon l'une quelconque des revendications 1 à 6, caractérisé en ce que la substance de marquage (10) est un liquide encreur ; l'élément adducteur étant un corps pointu imprégné par capillarité et capable de transmettre par conduction électrique la tension induite collectée par son extrémité en contact avec la surface libre (2).

FIG.1

0042313

1/5

FIG. 2

FIG.3

0042313

FIG.4

FIG.5

FIG.6

FIG.7

0042313

FIG.8

FIG.9

## DOCUMENTS CONSIDERES COMME PERTINENTS

| Catégorie | Citation du document avec indication, en cas de besoin, des parties pertinentes | Revendication concernée |
|---|---|---|
|  | FR - A - 2 095 548 (I.B.M. CORP.)  <br> * page 4, ligne 12 - page 5, ligne 13 * <br> -- | 1,4,5 |
| D | FR - A - 2 357 865 (THOMSON-CSF) <br> * page 2, ligne 31 - page 4, ligne 30 * <br> -- | 2,3,7 |
|  | FR - A - 2 131 681 (SIEMENS A.G.) <br> * page 6, ligne 8 - page 9, ligne 18; page 10, ligne 15 - page 11, ligne 3 * <br> -- | 2,7,8 |
| A | US - A - 3 134 099 (P.W. WOO) <br> * colonne 2, ligne 33 - colonne 4, ligne 5 * <br> -- | 3,5 |
| A | 1978 ULTRASONICS SYMPOSIUM PROCEEDINGS - IEEE CAT 78CH1344 25-27 septembre 1978 NEW JERSEY (US) E. DIEULESAINT et al.:"Saw Graphic Sensor" pages 198-200 <br> * page 199, dernier paragraphe; figure 1 * | 1,2,8, 9 |

**CLASSEMENT DE LA DEMANDE (Int. Cl.³)**

G 01 B 17/00
G 06 F 3/02
G 01 D 5/48

**DOMAINES TECHNIQUES RECHERCHES (Int. Cl.³)**

G 01 B 7/00
         17/00
G 06 F 3/02
G 01 D 5/48
         5/247
         5/12
G 10 K 11/36

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 22-09-1981 | CARETTE |

OEB Form 1503.1   06.78